# EUROPÄISCHE PATENTSCHRIFT

(11) **EP 0 665 387 B1**
(45) Veröffentlichungstag und Bekanntmachung des Hinweises auf die Patenterteilung: **01.04.1998**
(21) Anmeldenummer: 95100327.6
(22) Anmeldetag: 12.01.1995
(51) Int. Cl.: F16D 55/224, B60T 1/06

(54) **Scheibenbremse**
Disc brake
Frein à disque

(30) Priorität: 01.02.1994 DE 4402961
(43) Veröffentlichungstag der Anmeldung: 02.08.1995
(73) Patentinhaber: BPW Bergische Achsen Kommanditgesellschaft, 51674 Wiehl (DE)
(72) Erfinder: Flick, Dipl.-Ing. Joachim, D-51674 Wiehl (DE)
(74) Vertreter: Stenger, Watzke & Ring Patentanwälte

(56) Entgegenhaltungen:
- DE-A- 4 036 272
- GB-A- 2 102 902
- GB-A- 2 138 520
- US-A- 2 756 844

## Beschreibung

Die Erfindung betrifft eine Scheibenbremse mit einem die Bremsbelagträger aufnehmenden Gleitsattel, der zusammen mit dem an ihm befestigten Bremszylinder in Achsrichtung auf Gleitführungen eines rahmenartigen Gleitsattelträgers verschiebbar angeordnet ist, der seinerseits an einen am Achskörper befestigten Tragflansch lösbar angeschraubt ist.

Derartige Scheibenbremsen sind bekannt. Sie haben den Nachteil, daß der Gleitsattelträger von der Fahrzeuginnenseite her mit dem am Achskörper befestigten Tragflansch verschraubt ist. Bei einem Wechsel verschlissener Bremsscheiben müssen somit die Verschraubungen des Gleitsattelträgers von der Fahrzeuginnenseite her gelöst werden. Diese Arbeiten sind nicht nur umständlich und erfordern das Vorhandensein einer Grube; in den meisten Fällen steht außerdem wenig Raum zur Verfügung, so daß die Befestigungsschrauben nicht für automatische Schrauber oder Standard-Drehmomentschlüssel zugänglich sind, sondern mit Werkzeugen von Hand betätigt werden müssen.

Aus der DE-A-40 36 272 ist eine Scheibenbremse der eingangs beschriebenen Art bekannt, bei der die Befestigungsschrauben des Gleitsattelträgers am Tragflansch mit einem den Außendurchmesser der Bremsscheibe übersteigenden radialen Abstand zur Drehachse der Bremsscheibe angeordnet sind.

Durch diese Ausbildung werden die Befestigungsschrauben des Gleitsattelträgers am Tragflansch nach Demontage des Rades von der Fahrzeugaußenseite her zugänglich, so daß die Verschraubungen mit automatischen Schraubgeräten oder Drehmomentschlüsseln problemlos gelöst bzw. angezogen werden können, ohne daß hierfür eine Grube erforderlich ist.

Der Erfindung liegt die **Aufgabe** zugrunde, eine Scheibenbremse der aus der DE-A-40 36 272 bekannten Art derart weiterzubilden, daß insbesondere zum Zwecke des Bremsscheibenwechsels ein Abnehmen des Gleitsattelträgers entbehrlich ist.

Zur **Lösung** dieser Aufgabenstellung durch die Erfindung wird der Gleitsattelträger um eine der Befestigungsschrauben verschwenkbar ausgebildet, so daß es für einen Bremsscheibenwechsel nicht erforderlich ist, den den Gleitsattel mit den Bremsbelagträgern aufnehmenden Gleitsattelträger komplett von dem am Achskörper befestigten Tragflansch abzuschrauben, wenn eine Bremsscheibe gewechselt werden soll. Das erfindungsgemäße Verschwenken des Gleitsattelträgers um eine der Befestigungsschrauben erleichtert auch die Wiedermontage erheblich.

In der Zeichnung ist ein Ausführungsbeispiel der erfindungsgemäßen Scheibenbremse dargestellt, und zwar zeigen:
- Fig. 1: einen Schnitt durch die Scheibenbremse,
- Fig. 2: eine teilweise geschnittene Ansicht der Scheibenbremse von der Fahrzeugaußenseite her, jedoch der besseren Übersichtigkeit wegen ohne Nabe, und zwar mit am Tragflansch angeschraubtem Gleitsattelträger,
- Fig. 3: eine der Fig. 2 entsprechende Darstellung, jedoch mit um die obere Befestigungsschraube verschwenktem Gleitsattelträger,
- Fig. 4: eine weitere, den Fig. 2 und 3 entsprechende Darstellung, jedoch mit um eine unten liegende Befestigungsschraube verschwenktem Gleitsattelträger,
- Fig. 5: eine Ansicht des Gleitsattelträgers und
- Fig. 6: eine Ansicht des Gleitsattelträgers nach Fig. 5 von unten.

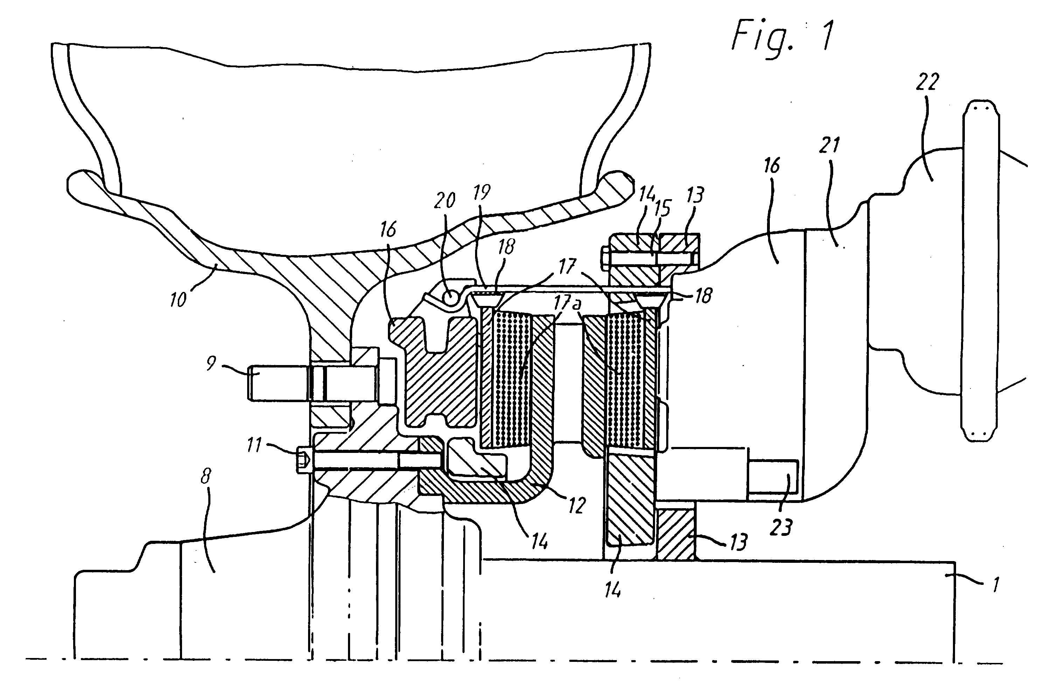

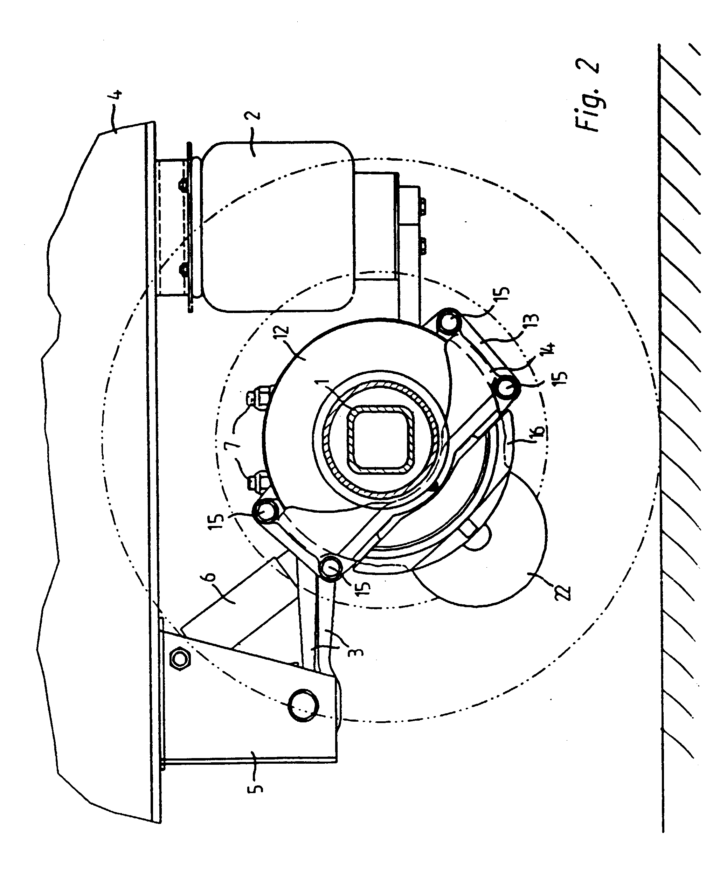

Die Fig. 1 und 2 zeigen einen Achskörper 1 einer Nutzfahrzeugachse, die mittels einer Luftfeder 2 und eines Längslenkers 3 an einem Fahrzeugrahmen 4 angeordnet ist, von dem ein Teil in Fig. 2 zu erkennen ist. Diese Fig. 2 zeigt weiterhin die Anlenkung des Längslenkers 3 an einer Konsole 5 und das Vorhandensein eines Stoßdämpfers 6. Weiterhin ist das obere Ende eines Federbügels 7 zu erkennen, durch den der Achskörper 1 am Längslenker 3 befestigt ist.

Gemäß Fig. 1 ist am Achskörper 1 eine Radnabe 8 drehbar gelagert, an der über Radbolzen 9 eine Felge 10 auswechselbar befestigt ist. An die Innenseite der Radnabe 8 ist mittels Schrauben 11 der Hals einer Bremsscheibe 12 angeschraubt, die beim Ausführungsbeispiel als innenbelüftete Bremsscheibe ausgeführt ist.

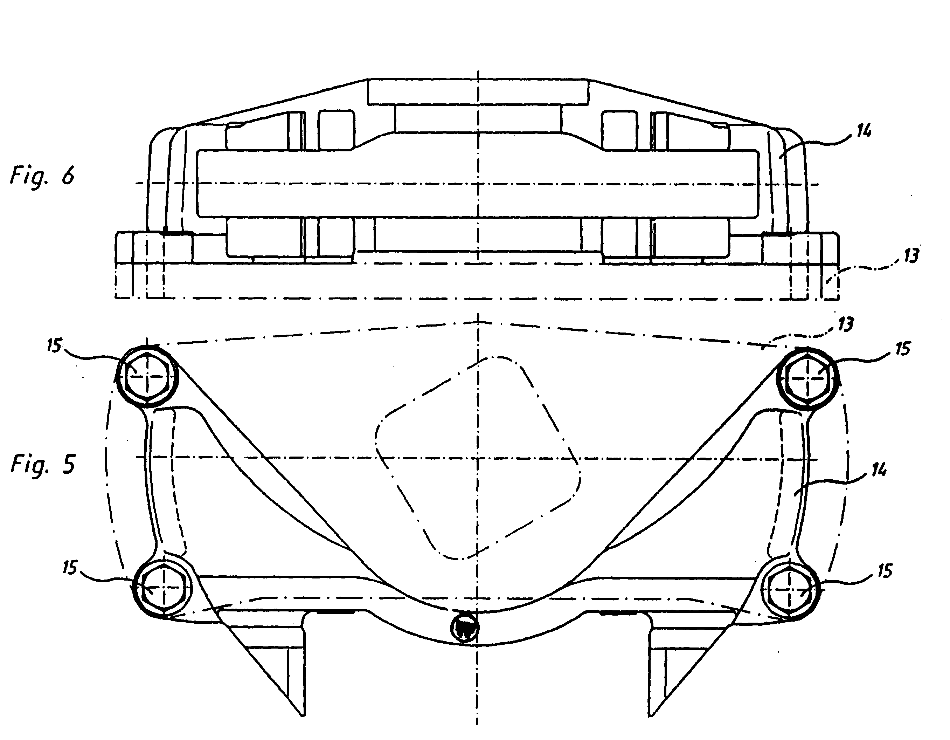

Am Achskörper 1 ist gemäß Fig. 1 ein Tragflansch 13 angeschweißt, an dessen zur Fahrzeugaußenseite liegende Fläche ein Gleitsattelträger 14 mittels Befestigungsschrauben 15 angeschraubt ist. Dieser Gleitsattelträger 14 ist rahmenartig ausgeführt, wie aus den Fig. 5 und 6 hervorgeht. In diesen Fig. 5 und 6 ist der Tragflansch 13 mit strichpunktierten Linien angedeutet.

An diesem Gleitsattelträger 14 ist ein Gleitsattel 16 auf Gleitführungen 23 in Achsrichtung verschiebbar gelagert, der seinerseits zwei Bremsbelagträger 17 aufnimmt, die jeweils mit einem Bremsbelag 17a versehen sind und auf gegenüberliegenden Seiten der Bremsscheibe 12 liegen. Diese Bremsbelagträger 17 werden in der vorschriftsmäßigen Lage innerhalb des Gleitsattels 16 durch Sicherungsfedern 18 gehalten, die jeweils an einem Bremsbelagträger 17 befestigt sind und durch einen Halter 19 vorgespannt werden. Dieser Halter 19 ist mit einem Ende in den zur Fahrzeuginnenseite liegenden Teil des Gleitsattels 16 eingehängt und wird an dem zur Fahrzeugaußenseite liegenden Teil des Gleitsattels 16 durch einen herausnehmbaren Sicherungsstift 20 gehalten. Die Fig. 1 zeigt außerdem einen über ein Gehäuse 21 am Gleitsattel 16 angeordneten Bremszylinder 22, dessen Kolben mittelbar auf den innenliegenden Bremsbelagträger 17 wirkt. Schließlich ist in Fig. 1 eine der Gleitführungen 23 angedeutet, die am Gleitsattelträger 14 angeordnet ist und auf der der Gleitsattel 16 in Achsrichtung verschiebbar gelagert ist.

Wie nunmehr die Fig. 2 erkennen läßt, sind die Befestigungsschrauben 15, mit denen der Gleitsattelträger 14 am Tragflansch 13 angeschraubt ist, mit einem radialen Abstand zur Drehachse der Bremsscheibe 12 angeordnet, der den Außendurchmesser der Bremsscheibe 12 übersteigt. Die Schraubenköpfe dieser Befestigungsschrauben 15 sind demzufolge von der Fahrzeugaußenseite her zugänglich, so daß Sie mit Hilfe von Schlagschraubern oder ähnlichen automatischen Schraubgeräten angezogen und gelöst werden können. Eine Demontage und spätere Wiedermontage des den Gleitsattel 16 mit den Bremsbelagträgern 17 aufnehmenden Gleitsattelträgers 14 ist somit auf einfache Weise möglich, nachdem die Felge 10 von der Radnabe 8 abgenommen worden ist, ohne daß hierzu eine Grube erforderlich ist.

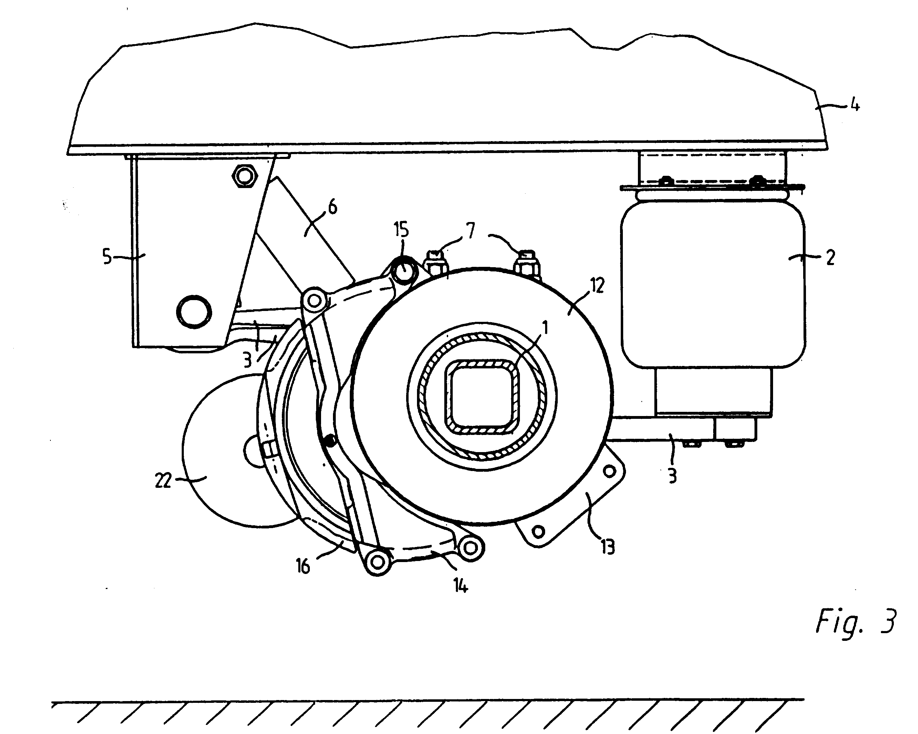

Die Fig. 3 zeigt, daß es für einen Wechsel der Bremsscheibe 12, die zusammen mit der Radnabe 8 vom Achskörper 1 abgenommen wird, nicht erforderlich ist, den Gleitsattelträger 14 komplett vom Tragflansch 13 abzuschrauben. Es ist ausreichend, wenn drei der beim Ausführungsbeispiel insgesamt vier Befestigungsschrauben 15 entfernt und die verbleibende Befestigungsschraube 15 gelockert wird, so daß der Gleitsattelträger 14 um diese verbliebene Befestigungsschraube 15 zur Freigabe der Bremsscheibe 12 verschwenkt werden kann.

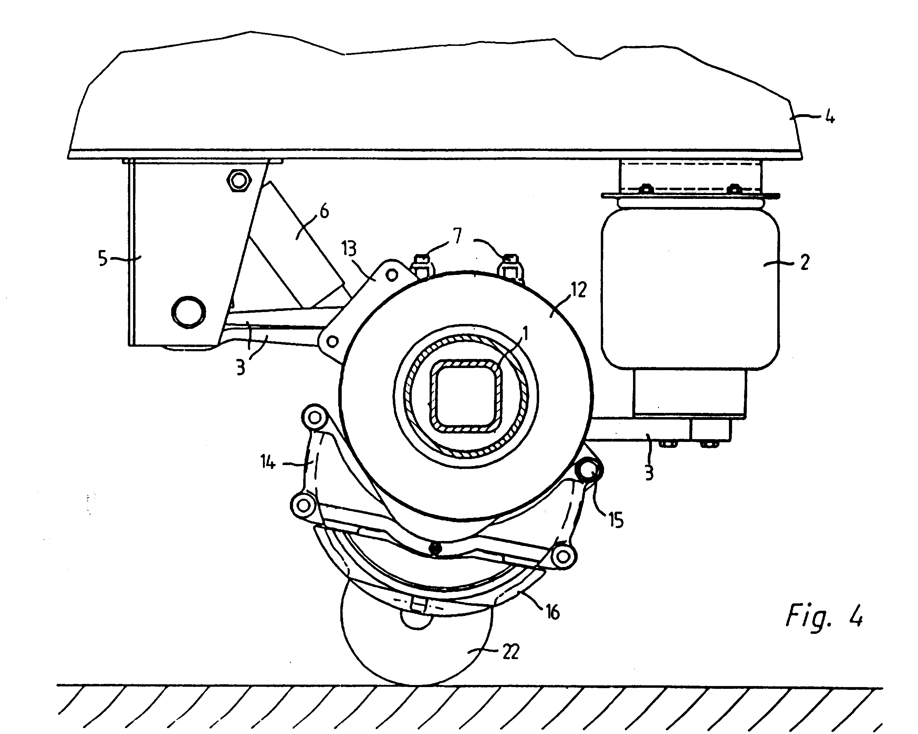

Aus der Fig. 4 geht schließlich hervor, daß eine derartige Verschwenkung des Gleitsattelträgers 14 nicht nur um die oberste Befestigungsschraube 15 erfolgen kann, sondern bei Bedarf auch um eine der beiden unten liegenden Befestigungsschrauben 15, wobei sich der Bremszylinder 22 in der verschwenkten Stellung auf der Fahrbahnoberfläche abstützt, wie dies Fig. 4 zeigt.

### Bezugszeichenliste

- 1: Achskörper
- 2: Luftfeder
- 3: Längslenker
- 4: Fahrzeugrahmen
- 5: Konsole
- 6: Stoßdämpfer
- 7: Federbügel
- 8: Radnabe
- 9: Radbolzen
- 10: Felge
- 11: Schraube
- 12: Bremsscheibe
- 13: Tragflansch
- 14: Gleitsattelträger
- 15: Befestigungsschraube
- 16: Gleitsattel
- 17: Bremsbelagträger
- 17a: Bremsbelag
- 18: Sicherungsfeder
- 19: Halter
- 20: Sicherungsstift
- 21: Gehäuse
- 22: Bremszylinder
- 23: Gleitführung

## Patentansprüche

1. Scheibenbremse mit einem die Bremsbelagträger (17) aufnehmenden Gleitsattel (16), der zusammen mit dem an ihm befestigten Bremszylinder (22) in Achsrichtung auf Gleitführungen (23) eines rahmenartigen Gleitsattelträgers (14) verschiebbar angeordnet ist, der seinerseits an einen am Achskörper (1) befestigten Tragflansch (13) lösbar angeschraubt ist, wobei die Befestigungsschrauben (15) des Gleitsattelträgers (14) am Tragflansch (13) mit einem den Außendurchmesser der Bremsscheibe (12) übersteigenden radialen Abstand zur Drehachse der Bremsscheibe (12) angeordnet sind,
**dadurch gekennzeichnet**,
daß der Gleitsattelträger (14) um eine der Befestigungsschrauben (15) verschwenkbar ausgebildet ist.

## Claims

1. Disc brake having a sliding caliper (16) which houses the brake pad carriers (17) and, together with the brake cylinder (22) mounted on it, is arranged such that it can be displaced in the axial direction on slideways (23) of a frame-like sliding caliper carrier (14) which, for its part, is bolted releasably to a supporting flange (13) mounted on the axle body (1), the mounting bolts (15) of the sliding caliper carrier (14) being arranged on the supporting flange (13) at a radial distance, with respect to the rotational axis of the brake disc (12), exceeding the external diameter of the brake disc (12), characterized in that the sliding caliper carrier (14) is designed such that it can pivot around one of the mounting bolts (15).

## Revendications

1. Frein à disque doté d'un étrier à glissière (16) abritant les supports de garnitures de frein (17), qui est disposé, conjointement avec le cylindre de frein (22) fixé à celui-ci, de façon à coulisser dans la direction axiale sur des glissières de guidage (23) d'un support d'étrier à glissière (14) de type à cadre, qui, de son côté, est boulonné de façon détachable à une bride de support (13) fixée au corps d'essieu (1), dans lequel les boulons de fixation (15) du support d'étrier à glissière (14) sont disposés sur la bride de support (13) avec un espacement radial par rapport à l'axe de rotation du disque de frein (12) supérieur au diamètre extérieur du disque de frein (12), caractérisé en ce que le support d'étrier à glissière (14) est conçu de façon à pouvoir pivoter autour de l'un des boulons de fixation (15).
